# DEMANDE DE BREVET EUROPEEN

(11) **EP 0 969 642 A1**
(43) Date de publication de la demande: **05.01.2000**
(21) Numéro de dépôt: 99201999.2
(22) Date de dépôt: 23.06.1999
(51) Int. Cl.: H04M 1/274

(54) **Appareil téléphonique équipé d'un dispositif d'appel automatique**

(30) Priorité: 30.06.1998 FR 9808304
(71) Demandeur: Koninklijke Philips Electronics N.V., 5621 BA Eindhoven (NL)
(72) Inventeur: De Crouy-Chanel, Rémy, 75008 Paris (FR)
(74) Mandataire: Landousy, Christian

(57) **Abrégé**

L'invention concerne un appareil téléphonique du type mobile, dans lequel est prévu un dispositif d'appel automatique dont la mémoire comprend divers champs spécifiques, pour définir le caractère local ou international de la communication, le préfixe éventuel du numéro du correspondant appelé par l'utilisateur et les numéros des correspondants. La décision d'appel est prise après détection des contenus de ces champs. Ladite mémoire contient également une zone supplémentaire pour un transcodage éventuel entre les caractères du premier champ et la codification des pays des correspondants appelés ou des préfixes liés à ces pays.
Application : dispositifs d'appel téléphonique automatiques.

## Description

La présente invention concerne un appareil téléphonique du type mobile comprenant un dispositif d'appel automatique incluant notamment :
- des moyens de mémorisation d'informations représentatives des numéros de téléphone des correspondants appelés, subdivisés en au moins trois zones destinées à la programmation de trois champs de données distincts ;
- des moyens de programmation du contenu desdits champs, prévus pour introduire dans le premier champ un premier code représentatif des divers pays de situation des correspondants appelés, dans le deuxième champ un deuxième code représentatif d'un préfixe lié au pays de situation desdits correspondants appelés et à la situation relative de l'utilisateur et du correspondant, et dans le troisième champ un troisième code représentatif du numéro personnel dudit correspondant ;
- des moyens de détection des contenus desdits champs lors de l'appel d'un correspondant par l'utilisateur de l'appareil ;
- des moyens d'appel en fonction des résultats desdites détections.

Le brevet des Etats-Unis US 5722088 décrit un exemple de réalisation d'un téléphone mobile dans lequel l'utilisateur peut mettre en mémoire les numéros de téléphone des correspondants qu'il appelle le plus fréquemment et compose le numéro qu'il souhaite à l'aide d'un dispositif de recherche automatique. Ces numéros de téléphone sont composés de deux parties : un préfixe, qui dépend du lieu où se trouve l'utilisateur (et, éventuellement, du réseau ou de l'opérateur choisi), suivi du numéro personnel du correspondant (en France, 9 chiffres actuellement).

Lorsqu'il est en mémoire dans le répertoire du téléphone ou dans une carte type SIM (SIM = Suscriber Identity Module ; il s'agit, dans un téléphone mobile de type GSM, de la carte -de format carte de crédit ou d'un format inférieur- qui contient toutes les données propres à l'utilisateur et qui est amovible, permettant ainsi son transfert d'un appareil à un autre), le numéro d'un correspondant peut être programmé de deux manières différentes : d'une façon locale, ou d'une façon internationale.

Selon la manière locale, tous les chiffres programmés sont systématiquement composés par le dispositif de recherche automatique, quel que soit l'endroit où se trouve l'utilisateur qui appelle, et quelle que soit la cellule à laquelle est connecté son téléphone mobile. De ce fait, le préfixe composé reste toujours le même, et un numéro composé ordinairement depuis l'étranger (pour un correspondant déterminé) n'est plus correctement interprété par le réseau lorsque l'utilisateur est dans le pays de ce correspondant. Il en est de même, réciproquement, lorsque l'utilisateur, se trouvant habituellement dans le même pays qu'un correspondant, l'appelle cette fois de l'étranger.

Selon la manière internationale, la programmation consiste à programmer le signe 〈〈 + 〉〉 suivi du code du pays où se trouve le correspondant appelé, puis, seulement après, les neuf chiffres de ce correspondant. L'inconvénient réside alors dans le fait que l'utilisateur doit soit connaître le numéro du pays du correspondant, soit avoir programmé d'une manière internationale les numéros de correspondants qu'il a l'habitude de composer d'une manière locale.

Le but de l'invention est alors de proposer un appareil téléphonique équipé d'un dispositif d'appel automatique qui soit utilisable indépendamment de l'endroit où se trouve l'utilisateur, ainsi que du réseau ou de la cellule à laquelle le téléphone mobile est connecté.

A cet effet, l'invention concerne un appareil téléphonique tel que défini dans le paragraphe introductif de la demande, et qui est en outre caractérisé en ce que :
- la détection d'un premier champ vide, ou au contraire programmé, correspond respectivement à un appel effectué, ou non, à l'intérieur des frontières du pays de situation de l'utilisateur et du correspondant ;
- la détection d'un deuxième champ vide, ou au contraire programmé, correspond, lorsque le premier champ est lui-même programmé, à un appel de type international, respectivement sans ou avec préfixe du numéro de correspondant ;
- la détection d'un deuxième champ programmé, ou au contraire vide, correspond, lorsque le premier champ est lui-même vide, à un appel de type local, respectivement avec choix d'un opérateur et du réseau d'appel associé ou, au contraire, sans ce choix mais avec celui d'un réseau de bases de données.

Dans une variante de réalisation, les moyens de mémorisation prévus peuvent comprendre également une quatrième zone, destinée à une table de transcodage entre une liste desdits premier codes représentatifs des pays de situation du correspondant appelé -ou des préfixes liés à ces pays- et une liste de désignation en clair desdits pays, et des moyens de reconnaissance d'une telle désignation.

A l'heure actuelle, un téléphone mobile comprend généralement un dispositif d'appel automatique, ou au moins d'aide à l'appel, qui évite à l'utilisateur d'avoir à composer systématiquement le numéro du correspondant. Le dispositif d'appel selon l'invention a pour spécificité de comprendre, dans un automate de numérotation, une mémoire subdivisée en trois champs distincts et gérée de façon particulière : en effet, dans cette mémoire qui se trouve à l'intérieur du téléphone lui-même ou dans la carte SIM, le premier champ contient une première information spécifique qui détermine sans ambiguïté le pays du correspondant. Cette information peut être programmée et affichée à l'aide d'un groupe de signes (par exemple, un, deux ou trois caractères choisis conformément aux lettres minéralogiques qui déterminent la provenance des voitures). La présence de signes dans ce premier champ signifie que le numéro programmé n'est pas un numéro local ; leur absence signifie au contraire que le numéro programmé est un numéro local (et que, comme on va le voir, les chiffres contenus dans les autres champs devront être systématiquement composés).

Par rapport à ce premier champ, le fonctionnement du dispositif d'appel automatique est le suivant, selon qu'il s'agit de l'étape de programmation du champ ou de l'étape d'appel elle-même :
- au moment de la programmation de ce champ, le dispositif permet d'afficher, à partir d'une liste préenregistrée mais modifiable, d'une part un groupe de un ou plusieurs caractères (en général, un, deux ou trois suffisent) qui sont associés au pays du correspondant, et d'autre part le nom de ce pays en clair. Lorsque le pays désiré est affiché, il est validé, et l'inscription du pays en clair s'efface tandis que le groupe de caractères associé est rangé en mémoire dans la liste. Lors d'éventuelles mises à jour de cette liste, celle-ci peut être présentée à l'utilisateur non plus par ordre alphabétique (ou selon un autre ordre préétabli) mais par fréquence décroissante d'utilisation.
- au moment de l'appel d'un correspondant par l'utilisateur, le contenu du répertoire téléphonique (c'est-à-dire de la liste préenregistrée selon l'étape de programmation décrite ci-dessus) est rappelé, soit par balayage et sélection du pays, soit par une sélection directement effectuée par l'intermédiaire d'une interface à commande vocale ou d'un dispositif similaire, et le contenu du premier champ mémorisé dans la liste est en même temps affiché (pour rappeler à l'utilisateur le pays du correspondant appelé).

Le deuxième des trois champs distincts de la mémoire correspond, à l'heure actuelle, au chiffre que l'on met souvent entre parenthèses sur les répertoires manuels ou les cartes de visite. D'une manière générale, ce chiffre n'est composé que si le correspondant appelé est situé dans le même pays que le lieu d'appel par l'utilisateur ou que la cellule à laquelle le téléphone mobile est connecté.

De ce fait, si, au moment de la programmation, aucun pays n'a été sélectionné (premier champ libre ou vide) et si le deuxième champ est également libre ou vide, alors seuls les chiffres du troisième champ -qui contient le numéro du correspondant- sont composés par l'automate de numérotation : ce processus correspond au mode de programmation local, permettant notamment la liaison avec un réseau de bases de données. Si, au contraire, ce deuxième champ comprend un chiffre, l'automate le compose, avant de composer, ensuite, les chiffres du troisième champ : ce processus correspond à la possibilité de choisir, pour les appels à longue distance dans un même pays, un opérateur ou un autre, et donc le réseau d'appel qui lui est associé.

Si, au contraire, au moment de la programmation, un pays a été sélectionné et que le deuxième champ est libre ou vide, une numérotation de type international est alors effectuée. Si ce deuxième champ contient un chiffre, l'automate le compose avant de composer les chiffres du troisième champ. Si le réseau refuse ou si ce chiffre ne peut pas être interprété, l'automate se comporte comme si ce deuxième champ était libre ou vide.

Lorsqu'il est connecté à un réseau, un téléphone mobile connaît les caractéristiques de celui-ci et celles de la carte SIM qu'il utilise. Il peut donc automatiquement connaître le préfixe à composer avant de former la partie du numéro qui est spécifique du correspondant recherché, et ce quel que soit le lieu où se trouve l'utilisateur, sans que celui-ci ait à se soucier du code international de son correspondant, qui lui est directement proposé.

Par exemple, plutôt que de programmer dans le répertoire 〈〈 +33 〉〉, qui est l'indicatif international de la France, suivi des neuf chiffres du correspondant, l'utilisateur, au moment de la programmation, sélectionnera 〈〈F 〉〉 suivi d'un chiffre qui apparaîtra entre parenthèses, puis les neuf chiffres de son correspondant. Alors, au moment d'un appel :
(a) si le premier champ est vide ou si aucun pays n'est validé, l'automate de numérotation ne prend aucune décision et va lire le deuxième champ ;
(b) si ce deuxième champ est lui aussi vide, l'automate de numérotation compose systématiquement les chiffres programmés dans le troisième champ ;
(c) si le deuxième champ contient un chiffre, celui-ci est composé si le réseau ou la cellule su lequel (ou laquelle) est connecté l'appareil l'autorise : si l'appel n'aboutit pas, le numéro complet est alors recomposé en y adjoignant le chiffre défini par défaut (en France, 〈〈 0 〉〉 ) ;
(d) si 〈〈 F 〉〉 (par exemple) est présent dans le premier champ, ce qui signifie que le numéro du correspondant est un numéro français, l'automate de numérotation compose 〈〈 0033 〉〉, ou l'équivalent d'une programmation actuelle de 〈〈 +33 〉〉, puis -si l'utilisateur se trouve à l'étranger- ne compose pas le chiffre du deuxième champ qui correspond au chiffre entre parenthèses, mais seulement les chiffres programmés dans le troisième champ ou au contraire -si l'utilisateur se trouve en France, c'est-à-dire dans le même pays que son correspondant- compose le chiffre du deuxième champ (si le réseau lui en donne l'autorisation) suivi des neuf autres chiffres du troisième champ.

Une zone de la mémoire, ou une mémoire autonome, peut être prévue pour assurer une fonction de transcodage permettant à l'automate de numérotation d'associer les caractères prédéfinis dans le premier champ à la codification du pays du destinataire, par exemple 〈〈 F 〉〉 à 〈〈 +33 〉〉 pour la France, ou 〈〈 I 〉〉 à 〈〈 +39 〉〉 pour l'Italie. Une telle codification est actuellement normalisée, mais les codes ainsi définis peuvent être éventuellement modifiés, ou leur liste s'accroître. Dans ce cas, une procédure spécifique peut être prévue pour la mise à jour de la table de transcodage, soit de façon automatique, soit par simple autorisation de l'utilisateur à effectuer cette mise à jour luimême.

## Revendications

1. Appareil téléphonique du type mobile comprenant un dispositif d'appel automatique incluant notamment :
- des moyens de mémorisation d'informations représentatives des numéros de téléphone des correspondants appelés, subdivisés en au moins trois zones destinées à la programmation de trois champs de données distincts ;
- des moyens de programmation du contenu desdits champs, prévus pour introduire dans le premier champ un premier code représentatif des divers pays de situation des correspondants appelés, dans le deuxième champ un deuxième code représentatif d'un préfixe lié au pays de situation desdits correspondants appelés et à la situation relative de l'utilisateur et du correspondant, et dans le troisième champ un troisième code représentatif du numéro personnel dudit correspondant ;
- des moyens de détection des contenus desdits champs lors de l'appel d'un correspondant par l'utilisateur de l'appareil ;
- des moyens d'appel en fonction des résultats desdites détections ; caractérisé en ce que :
- la détection d'un premier champ vide, ou au contraire programmé, correspond respectivement à un appel effectué, ou non, à l'intérieur des frontières du pays de situation de l'utilisateur et du correspondant ;
- la détection d'un deuxième champ vide, ou au contraire programmé, correspond, lorsque le premier champ est lui-même programmé, à un appel de type international, respectivement sans ou avec préfixe du numéro de correspondant ;
- la détection d'un deuxième champ programmé, ou au contraire vide, correspond, lorsque le premier champ est lui-même vide, à un appel de type local, respectivement avec choix d'un opérateur et du réseau d'appel associé ou, au contraire, sans ce choix mais avec celui d'un réseau de bases de données.

2. Appareil selon la revendication 1, caractérisé en ce que lesdits moyens de mémorisation comprennent également une quatrième zone, destinée à une table de transcodage entre une liste desdits premier codes représentatifs des pays de situation du correspondant appelé -ou des préfixes liés à ces pays- et une liste de désignation en clair desdits pays, et des moyens de reconnaissance d'une telle désignation.
